# EUROPÄISCHE PATENTSCHRIFT

(11) **EP 2 962 369 B1**
(45) Veröffentlichungstag und Bekanntmachung des Hinweises auf die Patenterteilung: **22.01.2020**
(21) Anmeldenummer: 14725603.6
(22) Anmeldetag: 26.02.2014
(51) Int. Cl.: H01R 43/02, B23K 31/00, B23K 20/12, B23K 20/10, B23K 11/00, H01R 43/048, H01R 4/62, H01R 4/18, H01R 11/12, B23K 103/10, B23K 101/32, B23K 101/00, B23K 11/02, B23K 101/38

(54) **VERFAHREN ZUM STOFFSCHLÜSSIGEN FÜGEN AN EINEM KABELENDE SOWIE KONFIGURIERTES KABEL**
METHOD FOR COHESIVE JOINING TO A CABLE END, AND ALSO CONFIGURED CABLE
PROCÉDÉ POUR RÉALISER UN ASSEMBLAGE PAR LIAISON DE MATIÈRE SUR UNE EXTRÉMITÉ DE CÂBLE ET CÂBLE CONFIGURÉ

(30) Priorität: 26.02.2013 DE 102013101876
(43) Veröffentlichungstag der Anmeldung: 06.01.2016
(73) Patentinhaber: Lisa Dräxlmaier GmbH, 84137 Vilsbiburg (DE)
(72) Erfinder: HARMS, Alexander, 39646 Oebisfelde (DE); ESSERS, Marc, 52072 Aachen (DE); SCHIEBAHN, Alexander, 52379 Langerwehe (DE); REISGEN, Uwe, 52249 Eschweiler (DE); SCHLESER, Markus, 52379 Langerwehe (DE)
(86) Internationale Anmeldenummer: PCT/DE2014/100068
(87) Internationale Veröffentlichungsnummer: WO 2014/131402

(56) Entgegenhaltungen:
- DE-A1- 4 440 189
- DE-A1-102011 018 353

## Beschreibung

Die Erfindung betrifft ein Verfahren zum stoffschlüssigen Fügen an einem Kabelende sowie ein konfiguriertes Kabel gemäß dem Oberbegriff des Anspruchs 11.

Ein aus Einzeladern aufgebautes Kabel der hier betroffenen Erfindung kann ein elektrisches oder elektronisches Kabel, z.B. eine Litze, sein, bei dem zumindest eine Teilanzahl der Einzeladern elektrische Einzelleiter sind.

Die Erfindung betrifft aber allgemein auch Kabel, welche zu anderen als elektrischen oder elektronischen Zwecken aus Einzeladern aufgebaut sind, wobei die Einzeladern auch aus anderen als metallischen Materialien bestehen können, z.B. aus Kunststoff, wie z.B. bei einem Kunststoffseil.

In der Automobiltechnik kommen vermehrt Litzen, insbesondere aus Aluminium, mit großen Querschnitten zum Einsatz. Eine dauerhafte Kontaktierung eines Endes einer solchen Litze mit einem Anschlusselement, z. B. einem Kabelschuh, einem Anschlussadapter, einer Batterieklemme, einem Steckerteil oder einem sonstigen Bauteil, ist nicht unproblematisch. Des Weiteren kann der Verlauf einer Litze durch einen Endknotens abgeschlossen werden oder mehrere Litzen werden durch Bildung eines gemeinsamen Endknotens miteinander verbunden. Dabei soll der Endknoten mechanisch und hinsichtlich des elektrischen Kontaktes zwischen den miteinander verbundenen Litzen dauerhaft sein. Eine Litze wird im Folgenden auch als Litzenkabel oder einfach als Kabel bezeichnet.

Ein Verfahren zum stoffschlüssigen Fügen an einem Kabelende sowie ein konfiguriertes Kabel der eingangs genannten Art sind aus der EP 2 025 046 B1 bekannt. Dabei wird ein abisoliertes freies Ende eines Litzenkabels in eine Hülse eingesetzt und mit dieser verpresst. In das andere Ende der Hülse wird das dem Litzenkabel zugeordnete Ende eines weiteren elektrisch leitenden Bauteils eingesetzt und an das in der Hülse verpresste Ende des Litzenkabels zur Anlage gebracht. Anschließend werden das Ende des Litzenkabels und das Ende des eingesetzten Bauteils mittels Widerstandsschweißen aneinandergefügt. Dabei muss der Schmelzpunkt der Hülse höher sein als die Schmelzpunkte der aneinander zu fügenden Bauteile. Nachteilig ist dabei, dass die Litzenstirnfläche vorbereitet werden muss, um diese für den Schweißprozess in geeigneter Weise an das Bauteil anlegen zu können. Zudem ist mit der Hülse ein gesondertes Fügehilfselement notwendig.

Aus der EP 2160806 B1 ist ein Verfahren zum elektrisch leitenden Verbinden von Litzen mit einem aus Metall bestehenden U-förmigen Träger mittels Ultraschallschweißens bekannt. Die Litze wird dabei in den U-förmigen Träger eingelegt und von einer seitlich eingreifenden Sonotrode mit Ultraschall beaufschlagt.

Beim Ultraschallschweißen wird zumeist das eine lineare Schwingungsbewegung des Ultraschallschwingersystems nutzende lineare Ultraschallschweißen verwendet, welches jedoch erfahrungsgemäß beim Einsatz im Zusammenhang mit Litzenkabeln bei großen Kabelquerschnitten, je nach Material z.B. bei Querschnitten von mehr als 80 mm², an seine Grenzen stößt. Ein zunehmender Litzenquerschnitt erschwert, auch aufgrund eines zunehmenden Dämpfungsgrades, eine homogene Einkopplung der Schwingungsenergie in den Gesamtlitzenquerschnitt. Die Ausbildung von stoffschlüssigen Verbindungen zwischen den Einzeladern nimmt daher mit zunehmendem Abstand von der Sonotrode derart stark ab, dass oftmals nur der sonotrodennahe Bereich erreicht wird.

Aus der EP 1 032 077 B1 sind ein Verfahren zum stoffschlüssigen Fügen eines Aluminiumkabels mit einem aus Kupfer oder einem anderen Metall bestehenden Anschlusselement sowie ein konfiguriertes Kabel der eingangs genannten Art bekannt. Es ist offenbart, das abisolierte Ende des Aluminiumkabels mit einer Stützhülse zu versehen, welche mit dem Aluminiumkabel verpresst und/oder darauf aufgeschrumpft wird, so dass die Einzeldrähte des Aluminiumkabels zumindest im Bereich der Stirnseite zusammengedrückt sind. Anschließend wird das Anschlusselement mit der aus den Einzeldrähten gebildeten Stirnseite des Endes des Aluminiumkabels verschweißt. Insbesondere ist dabei ein rotierendes Reibschweißen offenbart.

Aus der EP 2 227 247 B1 ist es bekannt, das zuletzt vorgestellte Verfahren sowie das zuletzt vorgestellte konfigurierte Kabel dadurch weiterzubilden, dass die Stirnseiten mittels torsionalem Ultraschallschweißen aneinandergefügt sind. Sowohl die EP 1 032 077 B1 als auch die EP 2 227 247 B1 erfordern für die Herstellung der Fügeverbindung eine möglichst plane Stirnseite, deren Schaffung aufwendig sein kann. Das torsionale Ultraschallschweißen erfordert rotationssymmetrische Schweißbereiche. Zudem hat das torsionale Ultraschallschweißen planer Stirnflächen zur Folge, dass die Umfangsgeschwindigkeit der Relativbewegung zwischen den zu verschweißenden Elementen zum Mittelpunkt der Torsionsbewegung hin geringer wird. In entsprechender Weise ändert sich der Energieeintrag über den Querschnitt, so dass eine gleichmäßige Schweißnahtqualität über dem gesamten Querschnitt fragwürdig ist. Ein weiterer Nachteil ist die notwendige Verpressung des Litzenendes mit der Stützhülse.

Aus der DE 10 2010 003 599 A1 sind ein Verfahren zur Kabelkonfektionierung sowie ein konfektioniertes Kabel bekannt, wobei es offenbart ist, zwischen freiliegende Einzeldrähte des Kabels ein zu einem Anschlusselement gehörendes, längliches, insbesondere stiftförmiges Widerlager einzubringen, so dass die Einzelleiter dieses Widerlager umgeben. Um die Einzelleiter und das Widerlager herum wird eine Hülse positioniert und mit den das Widerlager umgebenden Einzelleitern verpresst. Für den Verpressvorgang ist ein Magnet-Impulsschweißen offenbart. Somit erfolgt der Fügeprozess mit einem Kaltschweißen mit Impuls von außen auf die Hülse. Ein für das Magnet-Impulsschweißen typischer Impuls kann einen negativen Einfluss auf empfindliche elektrische Bauteile haben. Zudem sind die für das Magnet-Impulsschweißen benötigten Maschinenabmessungen vergleichsweise groß. Nachteilig ist des Weiteren das Erfordernis einer Hülse als zusätzliches Element.

Aus der DE 103 46 160 B3 sind ein Verfahren und eine Verbindung zur Kontaktierung eines Aluminiumkabels bekannt, wobei das aus Einzelleitern aufgebaute Aluminiumkabel mit der Stirnseite des abisolierten Endes des Kabels über eine verzinnte Kontaktklemme geschoben wird und eine Verbindung mittels Ultraschall-Verzinnung in einem flüssigen Zinnbad oder durch Wolfram-Inertgasschweißen oder Metall-Inertgasschweißen oder Laserschweißen erreicht wird.

Aus der DE 10 2010 044 241 ist ein Verfahren zur Herstellung einer Verbindung eines elektrischen aus mehreren Aluminiumdrähten gebildeten Aluminiumkabels mit einem Anschlussteil für elektrische Anlagen bekannt, bei dem das Anschlussteil eine Hülse zur Aufnahme des Endes des Aluminiumkabels aufweist und das Aluminiumkabel mit dem Anschlussteil unter Verwendung eines Lötvermittlers mit der Hülse verlötet wird.

Aus der DE 10 2008 031 588 B4 ist ein Verbindungselement für die elektrische Verbindung zwischen einer Leichtmetallleitung und einem elektrischen Kontakt bekannt, bei dem die Leichtmetallleitung mit einer Metallhülse kaltverschweißt und ein Kontaktelement mit der Metallhülse elektrisch leitend über eine ausgehärtete Flüssigkeit verbunden wird. Das Kontaktelement ist mit dem Kontakt verbindbar.

Aus der DE 10 2010 027 033 A1 ist ein Leiter mit einem Kontaktteil bekannt, welches über ein Anschlussteil mit dem Leiter verbunden ist, wobei das Anschlussteil mindestens eine Crimpverbindung umfasst. Die Crimpverbindung umschließt mindestens einen Teilbereich des Leiters, wobei der Leiter und das Kontaktteil durch eine Laserschweißverbindung miteinander verbunden sind.

Die EP 2022144 B1 offenbart ein Verfahren zum Herstellen eines im Querschnitt eine Polygongeometrie aufweisenden Durchgangs- oder Endknotens aus elektrischen Leitern. Hierfür werden die Litzen in einem Verdichtungsraum kompaktiert und anschließend mit Ultraschall verschweißt. Auch hier erfolgt der Kontakt des Schweißwerkzeuges zur Litze in einer Richtung quer zur Längserstreckung der Litze.

Aus der DE 4117696 C1 ist eine Vorrichtung zum Verschweißen der Adern einer aus Kupfer bestehenden Litze zu einem festen und gasdichten Anschlussknoten bekannt. Ein Abschnitt der Litze wird in einen Verdichtungsraum eingelegt und mittels Widerstandsverschweißung verschweißt. Der Eingriff der Elektroden auf die Litze erfolgt ebenfalls quer zur Längserstreckung der Litze.

Gemäß der DE 44 40 189 A1 wird ein Verfahren zur Herstellung einer elektrischen Verbindung zwischen einem festinstallierten oder bewegbaren Anschlußteil offenbart. Ein Spreizdorn wird dabei durch die Ultraschallsonotrode in die Stufenbohrung des Anschlußteils eingeführte, um eine Umbiegung des Anschlußkabels zu einem U-bügelförmigen Verbindungselement zu stabilisieren.

Die DE 10 2011 018353 A1 zeigt eine elektrische Verbindung eines Kabels mit einem Anschlussteil mittels eines Nietschafts, so dass ein Kontaktteil mit dem Anschlussteil vernietet werden kann.

Es ist nun Aufgabe der vorliegenden Erfindung, ein zum Stand der Technik alternatives Verfahren der eingangs genannten Art sowie ein alternatives konfiguriertes Kabel zur Verfügung zu stellen, mit denen eine besonders zuverlässige Fügeverbindung mit Einzeladern gewährleistet wird.

Bei einem Verfahren der eingangs genannten Art wird diese Aufgabe mit den Merkmalen des unabhängigen Anspruchs 1 gelöst.

Vorteilhafte Ausführungsformen des erfindungsgemäßen Verfahrens ergeben sich aus den Merkmalen der abhängigen Ansprüche 2, 3 und 5 bis 18.

Bei einem konfigurierten Kabel der eingangs genannten Art wird die Aufgabe durch die kennzeichnenden Merkmale des Anspruchs 11 gelöst. Vorteilhafte Ausbildungsformen des erfindungsgemäßen Kabels ergeben sich aus den kennzeichnenden Merkmalen der Ansprüche 12 und 13.

Bei einer ersten Variante des erfindungsgemäßen Verfahrens wird ein Schweiß-Werkzeugelement auf ein offenes Bündelende von Einzeladern des Kabelendes aufgesetzt. Es wird Schweißenergie in die Einzeladern eingespeist und hiernach das Schweiß-Werkzeugelement vom Bündelende entfernt. Mit der Entfernung des Schweiß-Werkzeugelements unterscheidet sich dieses Verfahren von jenen aus dem Stand der Technik, z.B. der EP 1 032 077 B1, bekannten Vorgehensweisen, bei denen das Bündelende mit einem weiteren Element, z.B. einem elektrischen Anschlussstück, mittels rotierendem Reibschweißen oder torsionalem Ultraschallschweißen verbunden wird und dabei das weitere Element als Schweißenergie in die Einzeladern des offenen Bündelendes einspeisendes Schweiß-Werkzeugelement dient und gleichzeitig Fügepartner ist.

Das Schweiß-Werkzeugelement setzt in Längsrichtung des Kabelendes auf die Einzeladern auf. Mit der Einspeisung der Schweißenergie auf das Bündelende wird zumindest eine Teilanzahl der Einzeladern zumindest teilweise plastifiziert oder aufgeschmolzen. Mit Unterstützung eines gleichzeitig in Längsrichtung des Kabelendes wirkenden Aufpressdrucks des Schweiß-Werkzeugelements kann eine Verdichtung des Materials der sich stoffschlüssig verbindenden Einzeladern im Bündelende erreicht werden. Die Verdichtung begünstigt ein tiefes Eindringen der Schweißenergie in das Bündelende und damit eine stabile Fügeverbindung zwischen den Einzeladern. Ein weiterer Fügepartner ist nicht erforderlich, kann aber bei Bedarf vorgesehen werden, z.B. eine den Umfang des Bündelendes umfassende Aufnahmehülse.

Das Schweiß-Werkzeugelement kann unterschiedliche Formen aufweisen, z.B. eine Stempelform mit einer zum Aufsetzen auf das Bündelende vorgesehenen ebenen Endfläche.

Beispielweise kann das Verfahren auch so ausgeführt werden, dass das Bündelende in eine durch eine Vertiefung gebildete Aufnahme des Schweiß-Werkzeugelements eingeführt wird. Dabei lehnen sich die äußeren Einzeladern des offenen Bündelendes oder ein die Einzeladern umgebendes Element, z.B. eine Hülse, an die Innenwand der Aufnahme und können über diesen Kontakt unmittelbar mit Schweißenergie versorgt werden. Die Mantelflächen der äußeren Einzeladern oder das umgebende Element werden dabei unmittelbar vom Schweiß-Werkzeugelement erreicht. Dieses Ausführungsbeispiel ist nicht Teil der Erfindung.

Das erfindungsgemäße Verfahren kann auch so ausgeführt werden, dass in das offene Bündelende eine Eingriffskuhle eingeformt, mittels eines Eingriffsstifts des Schweiß-Werkzeugelements in die Eingriffskuhle eingegriffen und zumindest ein Teil der Schweißenergie über die Eingriffskuhle eingespeist wird.

Durch die Schaffung der Eingriffskuhle wird das Bündel der Einzeladern gesplittet, und das Schweiß-Werkzeugelement kann axial in Längsrichtung des Kabelendes auf das offene Bündelende geführt werden und dabei auf eine im Vergleich zum ungesplitteten Bündel größere Einwirkfläche zugreifen. In der Eingriffskuhle kann der Eingriffsstift direkt auf die Mantelfläche der am Werkzeugelement anliegenden Einzeladern einwirken. Durch ein Einpressen des Eingriffsstifts in die Eingriffskuhle wirkt die Einpresskraft nicht nur auf die Köpfe der Einzelader-Enden, d.h. in der Längsrichtung der Einzeladern, sondern vordringlich auf die Einzelader-Mantelflächen, wodurch die Einzeladern besonders effektiv gegeneinander verdichtet werden können, insbesondere nachdem aufgrund der Einspeisung der Schweißenergie eine Plastifizierung oder ein

Aufschmelzen der Einzeladern bereits begonnen hat. Auf diese Weise kann die Energiezufuhr effizient gestaltet und eine dichte Fügung erreicht werden.

Die mit der Schweißenergie erzeugten Fügeverbindungen können sich auf die Fügungen zwischen Einzeladern beschränken, z.B. zur Erzeugung eines Kabelabschlusses. Weitere Fügepartner brauchen nicht zwingend beteiligt zu sein, können aber bei Bedarf vorgesehen werden, z.B. eine den Umfang des Bündelendes umfassende Aufnahmehülse.

Die Aufgabe wird auch mit den Merkmalen des nebengeordneten Anspruchs 4 gelöst. Das dort beanspruchte Verfahren entspricht weitgehend dem Verfahren nach Anspruch 3. Anders als dort verbleibt allerdings nach Anspruch 4 der Eingriffsstift als Teil des fertig gefügten Kabelendes als Fügepartner in der Eingriffskuhle und kann damit insbesondere zu einer verbesserten Stabilität und/oder zu einer verbesserten Dichtwirkung des gefügten Kabelendes beitragen.

Die Eingriffskuhle kann durch einen gesonderten Eingriffsstift erzeugt werden. Es kann aber vorteilhaft sein, wenn der die Eingriffskuhle erzeugende Eingriffsstift als Schweiß-Werkzeugelement oder als Teil hiervon dient. Auf diese Weise kann die Einbringung der Schweißenergie ohne Werkzeugwechsel im unmittelbaren Anschluss an die Erzeugung der Eingriffskuhle erfolgen. Der Eingriffsstift wird im Folgenden auch als Dorn bezeichnet, ohne dass hierdurch eine bestimmte geometrische Form des Eingriffsstiftes gemeint ist.

Es kann vorteilhaft sein, am Schweiß Werkzeugelement um den Eingriffsstift herum eine von einer umlaufenden äußeren Seitenwand umgebene ringförmige Aufnahme vorzusehen, in die das Bündelende oder zumindest ein Teilbündel hiervon aufgenommen wird. Auf diese Weise kann Schweißenergie auch unmittelbar in die Mantelflächen der an der Seitenwand anliegenden Einzeladern eingebracht werden.

Wird eine Eingriffskuhle im Bündelende vorgesehen, kann der in die Eingriffskuhle eingreifende Eingriffsstift oder Dorn unterschiedliche Formen annehmen und weist vorzugsweise eine sich zum vorderen, zur Einführung in das offene Bündelende vorgesehenen Ende verjüngende Form auf. So kann zumindest das vordere Ende des Eingriffsstifts konus- oder kegelstumpfförmig sein. Eine Halbkugelform oder andere sich verjüngende Formen können ebenfalls sinnvoll sein. Es können Stufen oder Abfasungen vorgesehen sein. Der Eingriffsstift kann einstückig mit dem restlichen Schweiß-Werkzeugelement verbunden oder am restlichen Schweiß-Werkzeugelement lösbar oder unlösbar fixiert sein.

Für die erfindungsgemäßen Verfahren kann als Schweißprozess bevorzugt das Reibschweißen mittels eines rotierenden Schweiß-Werkzeugelements eingesetzt werden. Das Reibschweißen hat den Vorteil, dass auch bei großen Querschnitten des Bündelendes von z.B. mehr als 80 mm² gute Fügeergebnisse erreicht werden können. Derart große Querschnitte werden zunehmend im Automobilbau für elektrische Kabel eingesetzt. Des Weiteren kann auch das Ultraschallschweißen, bevorzugt das torsionale Ultraschallschweißen, genutzt werden. Alternativ kann auch ein Widerstandsschweißen eingesetzt werden.

Des Weiteren kann es vorteilhaft sein, unterschiedliche Schweiß-Verfahren in Kombination nacheinander oder gleichzeitig einzusetzen. So könnte das Widerstandsschweiß-Verfahren vorbereitend vor oder begleitend gleichzeitig mit einem weiteren Schweiß-Verfahren, z.B. dem Reibschweißen oder dem (torsionalen) Ultraschallschweißen, eingesetzt werden.

Die erfindungsgemäßen Verfahren können auch so ausgeführt werden, dass das offene Bündelende von einer Aufnahmehülse umgeben ist. Dabei kann es sich, insbesondere bei Kunststoffkabeln, z.B. aus einem thermoplastischen Material, um eine Kunststoffhülse handeln. Im Falle metallischer, insbesondere elektrischer Kabel, kann eine metallische Aufnahmehülse vorgesehen sein, z.B. um das Kabelende mit einem weiteren Element elektrisch zu kontaktieren. Es können aber auch Aufnahmehülsen aus anderen Materialien vorgesehen werden, z.B. elektrisch isolierende Materialien.

Sofern in das Bündelende eine Eingriffskuhle eingebracht wird, kann es vorteilhaft sein, wenn an der Aufnahmehülse ein aufgeweitetes Endstück vorgesehen ist, welches das die Eingriffskuhle aufweisende Bündelende aufnimmt. Während des Schweißprozesses kann zumindest eine Teilanzahl der Einzeladern mit ihren Ader-Enden mittels des Schweiß-Werkzeugelements an die Innenwand des Endstückes der Aufnahmehülse gedrückt werden.

Mit dem aufgeweiteten Endstück stellt die Aufnahmehülse den Platz für die Eingriffskuhle zur Verfügung. In einer Variante des erfindungsgemäßen Verfahrens wird die Aufweitung des Endstückes der Aufnahmehülse durch die Einführung des Eingriffsstiftes oder Dorns erreicht oder fertig gestellt. Die Aufweitung kann aber auch bereits vor der Einführung des Eingriffsstiftes vollständig oder zum Teil bei der Fertigung oder Vorbereitung der Aufnahmehülse hergestellt worden sein.

Mit der Einführung des Eingriffsstiftes legt sich zumindest eine Teilanzahl der die Eingriffskuhle umgebenden Einzeladern an der Innenwand des aufgeweiteten Endstückes an. Mittels des Schweiß-Werkzeugelements wird über die Eingriffskuhle Schweißenergie für einen Schweißprozess eingespeist. Hierdurch können die Einzeladern untereinander und/oder mit der Innenwand des Endstückes der Aufnahmehülse eine stoffschlüssige Fügeverbindung eingehen.

Durch die Schaffung der Eingriffskuhle wird das Bündel der Einzeladern gesplittet. Hierdurch wird erreicht, dass der zu fügende Querschnitt bezogen auf den Bereich zwischen dem Schweiß-Werkzeugelement und der Aufnahmehülse verringert wird, so dass die für den Schweißprozess eingebrachte Energie nicht über den Gesamtquerschnitt des ungesplitteten Bündelendes eingebracht werden muss.

Der Eingriffsstift kann an die Form des aufgeweiteten Endstückes angepasst sein, das konusförmig oder anderweitig, z.B. kelchartig, geformt sein kann. Eine dem Endstück angepasste Form des Eingriffsstifts würde bedeuten, dass die Außenwand des Eingriffsstifts und die Innenwand des Endstückes zumindest streckenweise parallel zueinander verlaufen. Im Falle einer Konusform würden die Konuswinkel des Dorns und des aufgeweiteten Endstückes übereinstimmen. Da die Packungsdichte der Einzeladern mit steigendem Radius des aufgeweiteten Endstückes abnimmt, würde bei parallelen Wänden von Endstück und Eingriffsstift der Eingriffsstift die Einzeladern nicht über den gesamten Umfang gleichmäßig gegen die Innenwand des Endstückes drücken können. Dieser Effekt kann auch bei nicht dem Endstück angepasster Form des Eingriffsstifts auftreten.

Die oben dargestellte abnehmende Packungsdichte der Einzeladern im aufgeweiteten Endstück muss dabei nicht nachteilig sein. So ist es möglich, zunächst die nach Einführen des Eingriffsstifts kompakt an der Aufnahmehülse anliegenden Einzeladerstücke aneinander und/oder an die Aufnahmehülse zu fügen. Diese Einzeladern erweichen und kompaktieren, so dass anschließend auch die sich anschließenden Einzeladerstücke aneinander und/oder an die Aufnahmehülse angebunden werden. Somit ist eine fließende Anbindung zum Ende des offenen Bündels hin gegeben.

Denkbar wäre auch, das Schweiß-Werkzeugelement in einer rotierenden Schwenkbewegung zu führen, so dass nacheinander sämtliche Einzeladern auch im aufgeweiteten Endstück aneinander und an die Wand des Endstückes angepresst und in diesem Zustand aneinander und/oder an das Endstück gefügt werden. Hierdurch kann die Anbindungsfläche erhöht und damit die Anbindungsqualität verbessert werden. Zudem kann der Schweißprozess mit geringeren Kräften durchgeführt werden.

Da beim Schweißprozess in der Regel auch Einzeladern aneinandergefügt werden, ist eine zuverlässige Fügeverbindung erreichbar. Die Fügeverbindung kann auch in einem Teil der Aufnahmehülse bestehen, der nicht zum aufgeweiteten Endstück gehört.

Der Eingriffsstift kann auch so ausgeformt sein, dass seine Außenwand nicht parallel zu den Innenwänden des aufgeweiteten Endstückes verlaufen, sondern so gestaltet ist, dass über das gesamte aufgeweitete Endstück hinweg die Einzeladern durch den Eingriffsstift an die Innenwand des Endstückes angepresst werden.

Es kann vorteilhaft sein, die Aufnahmehülse vor dem Schweißprozess an dem Kabel kraftschlüssig und/oder formschlüssig zu fixieren, z.B. durch einen Press- oder Crimpvorgang.
Sofern der Eingriffsstift als Schweiß-Werkzeugelement oder als Teil desselben eingesetzt wird und am Schweiß-Werkzeug nicht oder lösbar fixiert ist, kann es vorteilhaft sein, den Eingriffsstift nach Abschluss des Schweißprozesses, z.B. im Falle des Reibschweißens, materialschlüssig an den Einzeladern gefügt im fertig konfigurierten Kabel zu belassen, wodurch die Fügewirkung zwischen Kabel und Aufnahmehülse erhöht und zudem ein optisch sauberer Abschluss des Kabels erreicht werden kann.

Die Aufnahmehülse kann Bestandteil eines zur elektrischen Kontaktierung vorgesehenen Anschlusselements, z.B. eines Kabelschuhs, sein.

Bevorzugte Ausführungsformen der erfindungsgemäßen Verfahren sowie des erfindungsgemäß konfigurierten Kabels sind im Folgenden anhand von Figuren dargestellt.

Es zeigt schematisch
- Fig. 1:: einen Querschnitt durch ein Kabel mit Anschlusselement mit einem Dorn in einer Aufspannvorrichtung,
- Fig.2:: den Querschnitt gemäß Fig. 1 in perspektivischer Sicht,
- Fig. 3:: ein fertig konfiguriertes Kabel in schräger Aufsicht,
- Fig. 4:: das fertig konfigurierte Kabel gemäß Fig. 3 im Anschnitt,
- Fig. 5:: einen Querschnitt durch einen Endknoten,
- Fig. 6:: die Herstellung eines Endknotens mit einer geänderten Geometrie des Schweiß-Werkzeugelements,
- Fig. 7:: eine alternative Darstellung zur Herstellung eines Endknotens mit einer weiteren geänderten Geometrie eines Schweiß-Werkzeugelements und
- Fig. 8a bis 14b:: unterschiedliche Geometrien von Schweiß-Werkzeugelementen.

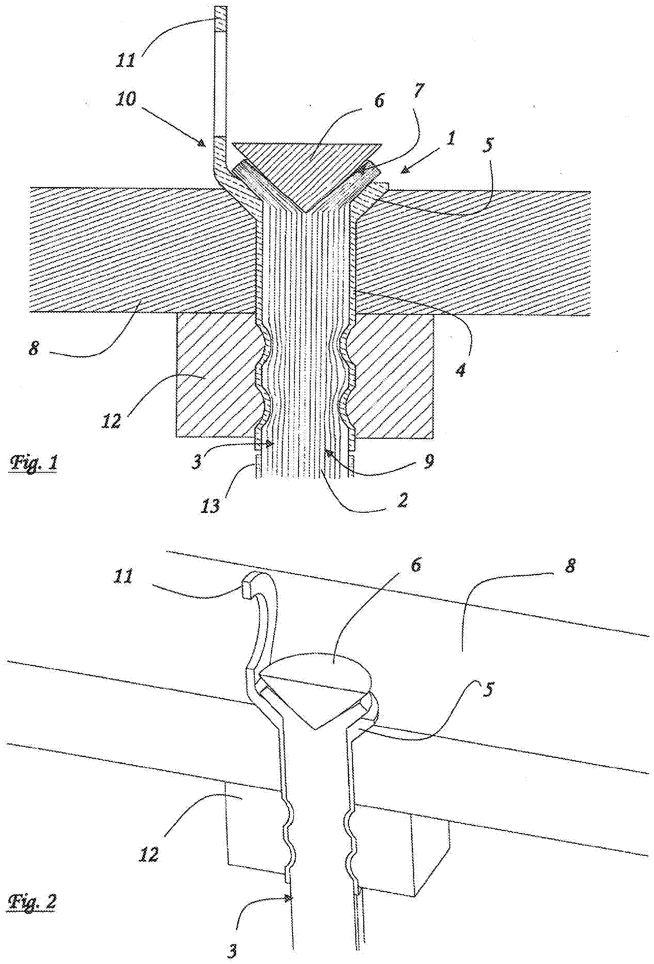

Fig. 1 und 2 zeigen schematisch im Querschnitt bzw. in einer geschnittenen perspektivischen Ansicht ein Litzenkabel 1 mit einer Vielzahl von Einzelleitern 2 in einem Bündel 3. Das Bündel 3 ist über eine Eintrittsöffnung 9 in eine Aufnahmehülse 4 gesteckt, welche Teil eines Anschlusselements, hier eines Kabelschuhs 10, ist, dessen Anschlussöse 11 einstückig an einem aufgeweiteten Endstück 5 der Aufnahmehülse 4 anschließt. Die Einzelleiter 2 ragen in das aufgeweitete Endstück 5 hinein. Das Bündel 3 ist bis zur Aufnahmehülse 4 mit einer Isolation 13 versehen. Die Isolation 13 kann aus Sicherheitsgründen aber auch bis in die Aufnahmehülse 4 hinein geführt sein. Ein zu fügender Bereich des Bündels 3 ist jedoch abisoliert, sofern eine stoffschlüssige Verbindung mit der Aufnahmehülse 4 vorgesehen ist. Je nach Auslegung oder Konfiguration der Isolation und je nach Qualitätsanforderung an die Schweißverbindung ist ein Abisoliervorgang jedoch nicht dringend erforderlich.

Mittels eines Dorns 6, der in das Bündel 3 eingefügt wird, werden die Einzelleiter 2 im aufgeweiteten Endstück 5 zur Seite gedrängt, so dass am Bündelende eine Eingriffskuhle 7 entsteht.

Zur Stabilisation des gesamten Systems ist eine Aufspannvorrichtung 8 vorgesehen, welche die Aufnahmehülse 4 stützt.

Der Dorn 6 dient gleichzeitig als Schweiß-Werkzeugelement, z.B. als Rotationsreibschweiß-Werkzeugelement für ein Reibschweiß-Verfahren, mit dem zumindest eine Teilanzahl der Einzelleiter 2 aneinander und / oder an die Innenwand der Aufnahmehülse 4 gefügt wird. Der Dorn 6 kann alternativ Schweiß-Werkzeugelement eines anderen Schweiß-Verfahrens sein, z. B. Sonotrode für ein torsionales Ultraschall-Schweißen. Während der Einspeisung der Schweißenergie wird das Schweiß-Werkzeugelement und damit der Dorn 6 gegen die Einzelleiter 2 gepresst,

so dass während der Plastifizierung oder Aufschmelzung von Einzelleiterbereichen eine Verdichtung am Bündelende erreicht wird.

In der dargestellten Variante sind die konusförmigen Verläufe der Außenwand des Dorns 6 und der Innenwand des Endstücks 5 parallel zueinander. Auf Grund der Verringerung der Packungsdichte der Einzelleiter 2 im aufgeweiteten Endstück 5 füllen diese Einzelleiter 2 den Raum zwischen der Innenwand des aufgeweiteten Endstücks 5 und der Außenwand des Dorns 6 bei zunehmendem Radius immer weniger aus. Dies muss nicht nachteilig sein, da im kompakteren Teil des Bündels 3 erzeugte Fügeverbindungen völlig ausreichend sein können. Alternativ könnte der z.B. als Reibschweiß-Werkzeugelement oder als Sonotrode fungierende Dorn 6 während des Schweißprozesses eine Schwenkbewegung derart ausführen, dass die Einzelleiter 2 nacheinander kompakt an die Innenwand des aufgeweiteten Endstücks 5 angepresst und materialschlüssig mit ihr und/oder miteinander verbunden werden.

Mittels einer hier nur teilweise dargestellten Fixiervorrichtung 12 wird die Aufnahmehülse 4 mit dem Bündel 3 verpresst, wodurch eine kraftschlüssige und formschlüssige Fixierung gegeben ist. Diese Fixierung erfolgt bevorzugt vor dem Schweißvorgang, um letzteren zu unterstützen.

Fixiervorrichtung 12 und Aufspannvorrichtung 8 werden nach dem Schweißprozess entfernt, so dass ein konfiguriertes Kabel 1 verbleibt. Der Dorn 6 kann ebenfalls entfernt werden, kann aber - sofern am restlichen Schweißwerkzeug nicht oder lösbar fixiert - auch als Teil des konfigurierten Kabels 1 verbleiben.

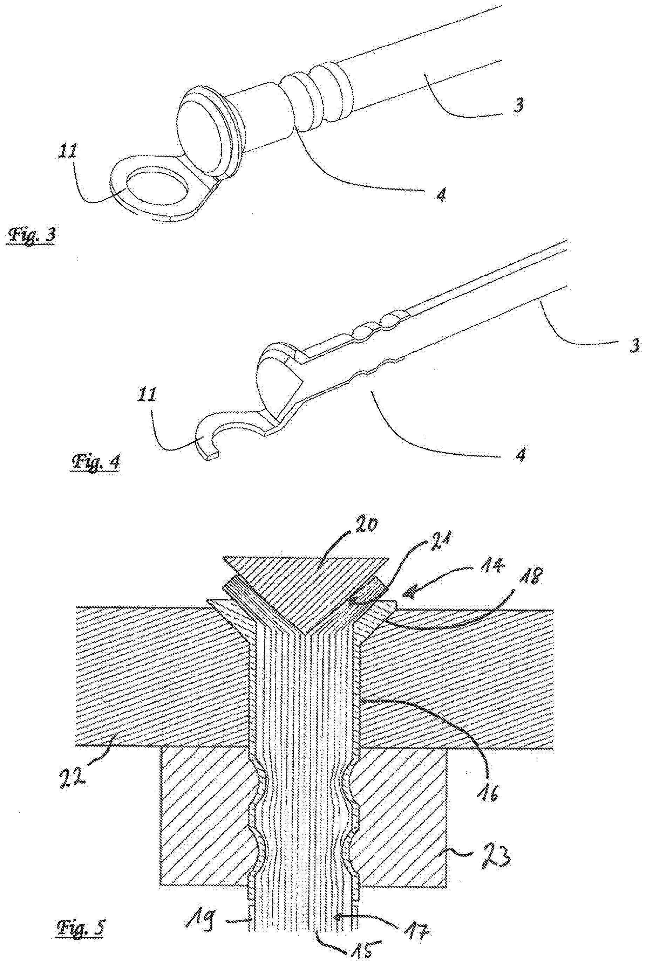

Fig. 3 und 4 zeigen das Ende eines fertig konfigurierten Kabels 1 in perspektivischer Aufsicht vollständig (Fig. 3) bzw. im Anschnitt (Fig. 4) mit dem Bündel 3, der Aufnahmehülse 4, dem aufgeweiteten Endstück 5 der Aufnahmehülse und der Anschlussöse 11.

Figur 5 zeigt eine Darstellung, die der Figur 1 ähnelt. Hier ist jedoch - anders als in Figur 1 - nicht die Verbindung eines Litzenkabels mit einem Anschlusselement gezeigt, sondern schematisch die Bildung eines Endknotens 14. Hierzu sind Einzelleiter 15 zweier oder mehrerer Litzenkabel als Bündel 17 in einer Aufnahmehülse 16 vereinigt. Die Einzelleiter 15 ragen in ein aufgeweitetes Endstück 18 der Aufnahmehülse 16 hinein. Die hier nicht gesondert dargestellten im Endknoten 14 vereinigten Litzenkabel können bis kurz vor der Aufnahmehülse 4 mit einer Isolation 19 versehen sein, die hier nur symbolisch dargestellt ist und sich tatsächlich um jedes einzelne Litzenkabel befindet. Es ist selbstverständlich auch möglich, das Bündel 17 der vereinigten Einzelleiter 15 innerhalb der Aufnahmehülse 16 mit einer Isolation zu versehen.

Mittels eines Dorns 20, der in das Ende des Bündels 17 eingreift, werden die Einzelleiter 15 im aufgeweiteten Endstück 18 zur Seite gedrängt, so dass am Ende des Bündels 3 eine Eingriffskuhle 21 entsteht. Zur Stabilisation des gesamten Systems ist eine Aufspannrichtung 22 vorgesehen, welche die Aufnahmehülse 16 stützt und vorzugsweise zur erleichterten Entnahme des fertigen Endknotens 14 mindestens zweiteilig ausgeführt ist.

Der Dorn 20 dient gleichzeitig als Element eines Schweiß-Werkzeugs, z.B. eines Rotationsreibschweiß-Werkzeugs, mit dem zumindest eine Teilanzahl der Einzelleiter 15 aneinander und/oder an die Innenwand der Aufnahmehülse 18 geschweißt wird. Der Dorn 20 kann alternativ Schweiß-Werkzeugelement eines anderen Schweiß-Verfahrens sein, zum Beispiel eine Sonotrode für ein torsionales Ultraschall-Schweißen.

Hinsichtlich der Konusform des Dorns 20 und der Innenwand des aufgeweiteten Endstücks 18 und deren Zusammenspiel wird auf die entsprechende Beschreibung zu Figur 1 verwiesen. Mittels einer hier nur teilweise dargestellten Fixiervorrichtung 23 wird die Aufnahmehülse 16 mit dem Bündel 17 verpresst, wodurch eine kraftschlüssige und formschlüssige Fixierung gegeben ist. Diese Fixierung erfolgt bevorzugt vor dem Schweißvorgang, um letzteren zu unterstützen. Dorn 20, Aufspannvorrichtung 22 und Fixiervorrichtung 23 werden nach dem Schweißprozess entfernt, so dass ein fertiger Endknoten 14 mehrerer Litzenkabel verbleibt.

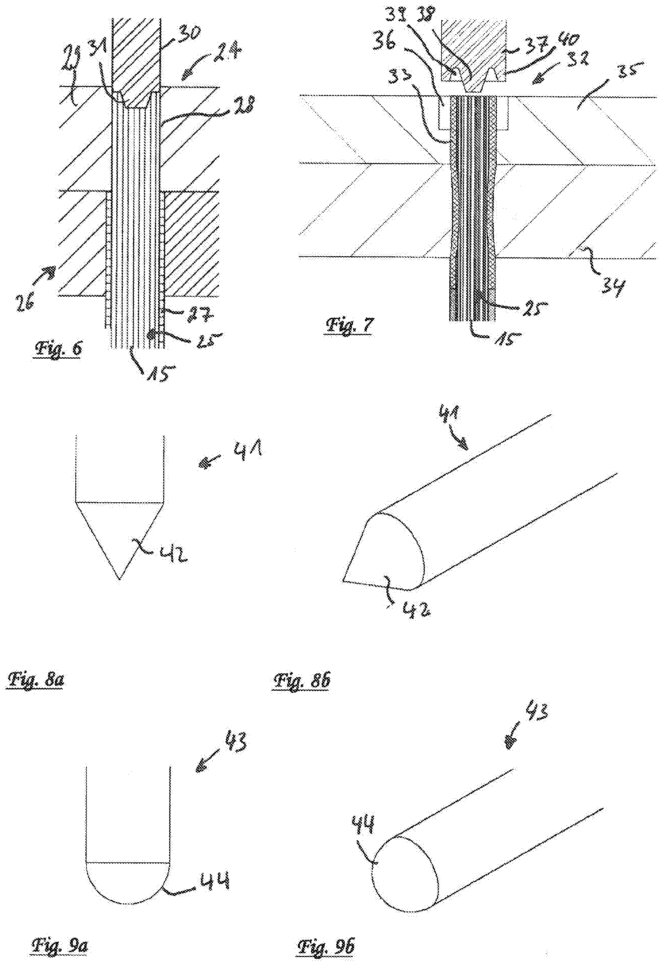

Figur 6 zeigt schematisch die Herstellung eines Endknotens 24 aus Einzelleitern 15. Der Endknoten 24 weist keine Aufnahmehülse auf. Das Bündel 25 der Einzelleiter 15 ist in einer Klemmvorrichtung 26 von einer Isolierung 27 umgeben und wird dort durch eine Querschnittsreduzierung des Bündels 25 entlang der gesamten Klemmvorrichtung 26 geklemmt. Das abisolierte Ende 28 des Bündels 25 wird seitlich durch eine Aufspannvorrichtung 29 begrenzt.

Von oben greift in das abisolierte Ende 28 ein Schweiß-Werkzeug 30 ein, welches an seinem vorderen Ende als Eingriffselement einen Dorn 31 in Kegelstumpfform aufweist. Der Dorn 31 erzeugt im abisolierten Bündelende 28 eine Eingriffskuhle. Zur Erzeugung der Eingriffskuhle kann bereits Schweißenergie eingespeist werden. Die durch die Plastifizierung oder Aufschmelzung von Teilen der Einzelleiter 15 bei gleichzeitigem Pressdruck über das Schweiß-Werkzeug 30 erreichte Verdichtung des Einzelleitermaterials im Bündelende erlaubt die Ausbildung der Eingriffskuhle auch ohne Aufweitung des Bündelendes.

Über das Schweiß-Werkzeug 30 wird Schweißenergie in das abisolierte Ende 28 des Bündels 25 eingebracht, so dass die Einzelleiter 15 des Bündels 25 stoffschlüssig aneinandergefügt werden. Wie weit der Fügeprozess vom Schweiß-Werkzeug 30 in das Bündel 15 hinein fortschreitet, hängt von der Dauer der Einwirkung, dem Anpressdruck des Schweiß-Werkzeugs 30, der Art des Schweißprozesses und der eingebrachten Leistung ab.

Figur 7 zeigt einen weiteren Endknoten 32, wobei diesmal das Bündel 25 der Einzelleiter 15 wieder von einer Aufnahmehülse 33 umgeben ist. Durch eine Fixiervorrichtung 34 wird durch eine Querschnittsreduzierung der Aufnahmehülse 33 mit innenliegendem Bündel 25 eine kraftschlüssige Fixierung des Bündels 25 in der Aufnahmehülse 33 erreicht. Mit ihrem oberen Ende ragen Aufnahmehülse 33 und Bündel 25 in eine Aufspannvorrichtung 35 hinein, welche eine Werkzeugaufnahme 36 aufweist.

Für den Fügeprozess wird ein Schweiß-Werkzeug 37 mit einem kegelstumpfförmigen Dorn 38 in das offene Ende des Bündels 25 abgesenkt, wodurch eine Eingriffskuhle in das Ende des Bündels 25 erzeugt wird. Der Dorn 38 ist von einer ringförmigen Aufnahme 39 umgeben, welche die Einzelleiter 15 sowie die Aufnahmehülse 33 an ihren jeweiligen Enden aufnimmt. Außen ist die ringförmige Aufnahme von einer umlaufenden Seitenwand 40 umgeben. Bei aufgepresstem Schweiß-Werkzeug 37 kann nun die Schweißenergie über die gesamte Oberfläche des Dorns 38 dem Boden der Aufnahme 39 und der inneren Seite der Seitenwand 40 auf den Verbund aus Bündel 25 und Aufnahmehülse 33 gegeben werden. Auf diese Weise kann die Qualität der Fügeverbindung erhöht werden. Die Werkzeugaufnahme 36 erlaubt zudem ein Ausweichen der Aufnahmehülse 33 und der Einzelleiter 15 nach außen, während das Schweiß-Werkzeug 37 abgesenkt wird.

Sowohl nach der Vorrichtung gemäß Figur 6 als auch der Vorrichtung gemäß Figur 7 werden nach dem Fügeprozess das Schweiß-Werkzeug 30 bzw. 37, die Aufspannvorrichtungen 29 bzw. 35, und die Klemmvorrichtung 26 bzw. die Fixiervorrichtung 34 entfernt.

In den Figuren 8a bis 14b werden ausschnittsweise Schweiß-Werkzeuge mit unterschiedlichen Geometrien an ihrem zu Eingriff in ein Bündel aus Einzeladern vorgesehenen Ende dargestellt. Sämtliche Geometrien können sowohl in Varianten eingesetzt werden, bei denen das Bündel der Einzeladern von einer Aufnahmehülse umgeben ist oder ohne Aufnahmehülse verbleibt. Des Weiteren ist keine Einschränkung auf das Vorhandensein einer Isolierung im Fügebereich gegeben. Des Weiteren können sämtliche dargestellten Geometrien von Schweiß-Werkzeugen sowohl für die Herstellung von Endknoten, einschließlich eines abschließenden Endes einer einzelnen Kabellitze als auch zur Herstellung einer Verbindung einer oder mehrerer Kabellitzen mit einem Anschlusselement (siehe zum Beispiel Figur 1) eingesetzt werden.

Auch die in den Figuren 5 bis 7 dargestellten Verfahrensvarianten können jeweils mit oder ohne Aufnahmehülse und sowie mit oder ohne Isolierung durchgeführt werden sowie zur Bildung eines Endknotens als auch zur Bildung einer Verbindung zu einem Anschlusselement, z.B. einem Kabelschuh, dienen.

Die Figuren 8a und 8b zeigen im Querschnitt und in der perspektivischen Schrägansicht die Spitze eines Schweiß-Werkzeugs41 mit einem spitz zulaufenden konusförmigen Dorn 42.

In den Figuren 9a und 9b weist ein Schweiß-Werkzeug 43 einen halbkugelförmigen Dorn 44 auf.

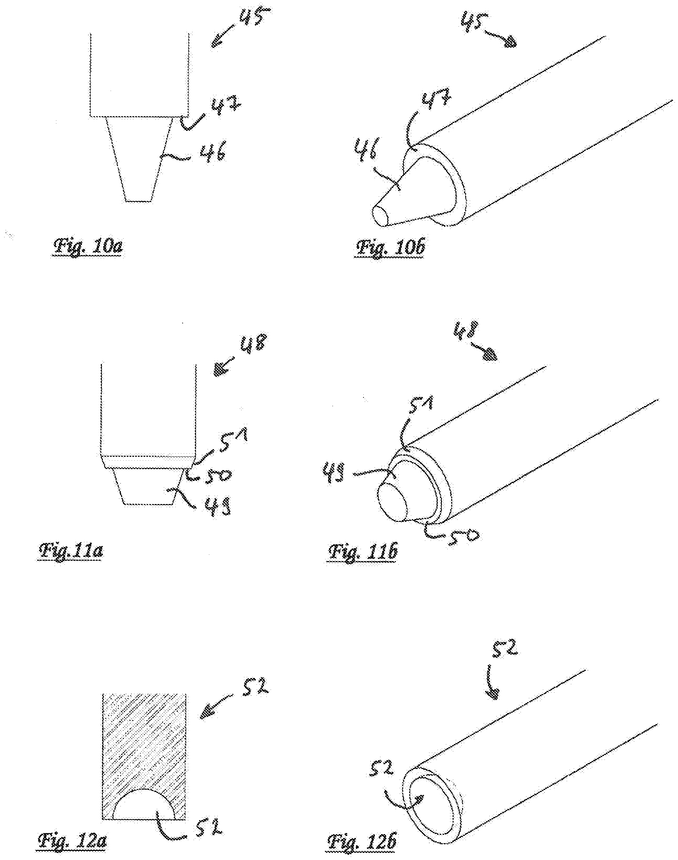

Die Figuren 10a und 10b zeigen ein Schweiß-Werkzeug 45 mit einem kegelstumpfförmigen Dorn 46, wobei der Dorn 46 noch von einem ringförmigen Absatz 47 umgeben ist.

Die Figuren 11a und 11b zeigen ein Schweißwerkzeug 48 mit einem ebenfalls kegelstumpfförmigen Dorn 49, der an dem Absatz 50 sowie an den Absatz 50 anschließend von einem abgefasten Rand 51 umgeben ist. Der abgefaste Rand 51 kann den Eintritt des Schweiß-Werkzeugs 48 erleichtern, insbesondere, wenn die Einzelleiter von einer Hülse umgeben sind, deren Innendurchmesser gleich oder kleiner dem Außendurchmesser des Schweiß-Werkzeuges 48 ist.

Die Größe der Endfläche des Kegelstumpfes des Dorns 49 kann vom Material der Einzelleiter abhängen. So könnte bei spröderem Material der Einzelleiter ein größerer Enddurchmesser sinnvoll sein, um ein Abbrechen der Einzelleiter und ggf. bei einem rotierendem Werkzeugeingriff ein Herausschleudern des Einzelleiterwerkstoffes zu verhindern, welches bei Eindringen eines spitzen Dorns ohne genügende vorherige Plastifizierung oder Aufschmelzung von Teilen der Einzelleiter auftreten könnte. Diese Überlegung gilt selbstverständlich auch bei von der Kegelstumpfform abweichenden Formen des Dorns.

Die Figuren 12a und 12b zeigen ein Schweiß-Werkzeug 52, welches keinen Dorn, jedoch eine halbkugelförmige Aufnahme 52 aufweist, welche das obere Ende eines Einzelleiter-Bündels mit oder ohne Aufnahmehülse aufnehmen kann. Dieses Schweiß-Werkzeug 52 wird nicht als Teil der Erfindung betrachtet.

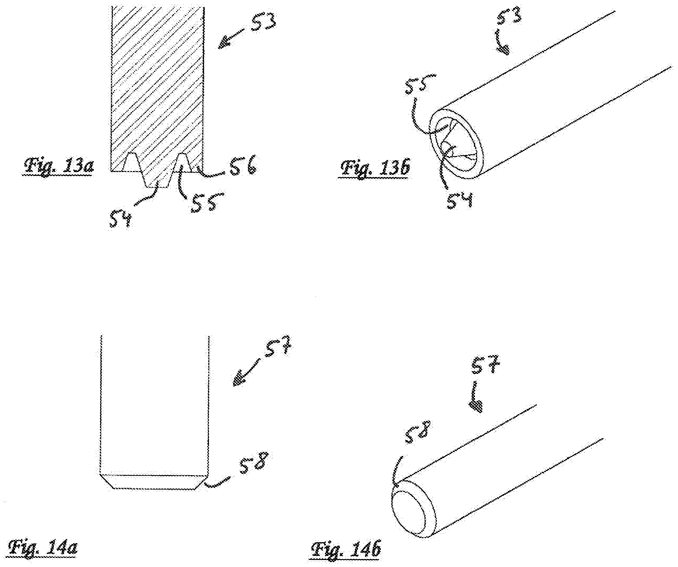

Die Figuren 13a und 13b zeigen ein Schweiß-Werkzeug 53 mit einem kegelstumpfförmigen Dorn 54, der von einer ringförmigen Aufnahme 55 umgeben ist, welche außen von einer umlaufenden Seitenwand 56 umschlossen ist. Das Schweißwerkzeug 53 der Figuren 13a und 13b entspricht dem Schweiß-Werkzeug 37 in Figur 7.

Die Figuren 14a und 14b zeigen schließlich ein Schweiß-Werkzeugelement 57, welches lediglich am vorderen Rand eine Abfasung 58 aufweist. Hiermit oder auch mit einer Variante ohne Abfasung 58 könnte ein Kabelende ohne Eingriffskuhle erzeugt werden.

**Bezugszeichenliste**

| | | | |
|---|---|---|---|
| 1 | Litzenkabel | 30 | Schweiß-Werkzeug# |
| 2 | Einzelleiter | 31 | Dorn |
| 3 | Bündel | 32 | Endknoten |
| 4 | Aufnahmehülse | 33 | Aufnahmehülse |
| 5 | Endstück | 34 | Fixiervorrichtung |
| 6 | Dorn | 35 | Aufspannvorrichtung |
| 7 | Eingriffskuhle | 36 | Werkzeugaufnahme |
| 8 | Aufspannvorrichtung | 37 | Schweiß-Werkzeug |
| 9 | Eintrittsöffnung | 38 | Dorn |
| 10 | Kabelschuh | 39 | Ringförmige Aufnahme |
| 11 | Anschlussöse | 40 | Seitenband |
| 12 | Fixiervorrichtung | 41 | Schweiß-Werkzeug |
| 13 | Isolation | 42 | Dorn |
| 14 | Endknoten | 43 | Schweiß-Werkzeug |
| 15 | Einzelleiter | 44 | Dorn |
| 16 | Aufnahmehülse | 45 | Schweiß-Werkzeug |
| 17 | Bündel | 46 | Dorn |
| 18 | Aufgeweitetes Endstück | 47 | Absatz |
| 19 | Isolation | 48 | Schweißwerkzeug |
| 20 | Dorn | 49 | Dorn |
| 21 | Eingriffskuhle | 50 | Absatz |
| 22 | Aufspannvorrichtung | 51 | Abgefaster Rand |
| 23 | Fixiervorrichtung | 52 | Aufnahme |
| 24 | Endknoten | 53 | Schweiß-Werkzeug |
| 25 | Bündel | 54 | Dorn |
| 26 | Klemmvorrichtung | 55 | Ringförmige Aufnahme |
| 27 | Isolierung | 56 | Seitenwand |
| 28 | Abisoliertes Ende | 57 | Schweiß-Werkzeug |
| 29 | Aufspannvorrichtung | 58 | Abfasung |

## Patentansprüche

1. Verfahren zum stoffschlüssigen Fügen an einem offenen Bündelende von Einzeladern (2, 15) mindestens eines Kabelendes (1), bei dem ein Schweiß-Werkzeugelement (30, 37, 41, 43, 45, 48, 53) mit in Längsrichtung des Bündelendes wirkendem Aufpressdruck auf das offene Bündelende aufgesetzt wird, und in das offene Bündelende eine Eingriffskuhle (7, 21) eingeformt und mittels eines Eingriffsstifts (6, 20, 31, 38, 42, 44, 46, 49, 54) des Schweiß-Werkzeugelements (30, 37, 41, 43, 45, 48, 53) in die Eingriffskuhle (7, 21) eingegriffen wird, Schweißenergie mittels Reibschweißen mit rotierendem Schweiß-Werkzeugelement oder mittels torsionalem Ultraschall-Schweißen in die Einzeladern (2, 15) eingespeist wird, wobei zumindest ein Teil der Schweißenergie über die Eingriffskuhle (7, 21) eingespeist wird, und das Schweiß-Werkzeugelement (30, 37, 41, 43, 45, 48, 53) vom Bündelende entfernt wird.

2. Verfahren nach Anspruch 1, **dadurch gekennzeichnet, dass** die Eingriffskuhle (7, 21) mittels des Eingriffsstifts (6, 20, 31, 38, 42, 44, 46, 49, 54) des Schweiß-Werkzeugelements (30, 37, 41, 43, 45, 48, 53) eingeformt wird.

3. Verfahren nach Anspruch 1 oder 2, **dadurch gekennzeichnet, dass** der Eingriffsstift (6, 20, 31, 38, 42, 44, 46, 49, 54) mit dem restlichen Schweiß-Werkzeugelement (30, 37, 41, 43, 45, 48, 53) einstückig oder am restlichen Schweiß-Werkzeugelement (30, 37, 41, 43, 45, 48, 53) unlösbar fixiert ist.

4. Verfahren nach einem der Ansprüche 1, 2 bis 3, **dadurch gekennzeichnet, dass** das Schweiß-Werkzeugelement (30, 37, 41, 43, 45, 48, 53) das Bündelende oder zumindest ein Teilbündel hiervon in eine den Eingriffsstift (6, 20, 31, 38, 42, 44, 46, 49, 54) umlaufende, durch eine Vertiefung gebildete ringförmige Aufnahme (39, 55) aufnimmt.

5. Verfahren nach einem der vorhergehenden Ansprüche, **dadurch gekennzeichnet, dass** der Schweißprozess aus mindestens zwei zu verschiedenen Schweißverfahren gehörenden Teilschweißprozessen besteht, wobei als einer der Teilschweißprozesse Widerstandsschweißen eingesetzt wird und die unterschiedlichen Schweiß-Verfahren nacheinander oder gleichzeitig eingesetzt werden.

6. Verfahren nach einem der vorhergehenden Ansprüche , **dadurch gekennzeichnet, dass** das offene Bündelende vor Aufsetzen des Schweiß-Werkzeugelements (30, 37, 41, 43, 45, 48, 53) in eine Aufnahmehülse (4, 16, 33) eingeführt wird, wobei die Eingriffskuhle (7, 21) des Bündelendes in einem aufgeweiteten Endstück (5, 18) der Aufnahmehülse (4, 16, 33) angeordnet wird.

7. Verfahren nach Anspruch 6, **dadurch gekennzeichnet, dass** während des Schweißprozesses zumindest eine Teilanzahl von die Eingriffskuhle (7, 21) umgebenden Enden von Einzeladern (2, 15) mittels des Schweiß-Werkzeugelements (30, 37, 41, 43, 45, 48, 53) an die Innenwand des Endstückes (5, 18) der Aufnahmehülse (4, 16, 33) gedrückt wird.

8. Verfahren nach Anspruch 7, **dadurch gekennzeichnet, dass** zum Andrücken der Einzeladern (2, 15) das Schweiß-Werkzeugelement (30, 37, 41, 43, 45, 48, 53) in der Eingriffskuhle (7, 21) in einer Schwenk- und/oder rotierenden Bewegung geführt wird.

9. Verfahren nach einem der vorhergehenden Ansprüche, **dadurch gekennzeichnet, dass** im offenen Bündelende Einzeladern (2, 15) mindestens zweier Kabelenden (1) vereinigt werden und ein Kabelendknoten (14, 24, 32) erzeugt wird.

10. Verfahren nach einem der Ansprüche 1 bis 8, **dadurch gekennzeichnet, dass** die Einzeladern (2, 15) mit einem zur elektrischen Kontaktierung vorgesehenen Anschlusselement (11) verfügt werden.

11. Konfiguriertes Kabel mit mindestens einem Kabelende (1) mit einem offenen Bündelende aus Einzeladern (2, 15), **dadurch gekennzeichnet, dass** in das offene Bündelende der Einzeladern (2, 15) eine Eingriffskuhle (7, 21) mittels eines Eingriffsstifts (6, 20, 31, 38, 42, 44, 46, 49, 54) eines Schweiß-Werkzeugelements (30, 37, 41, 43, 45, 48, 53 mit in Längsrichtung des Bündelendes wirkenden Aufpressdruck auf das offene Bündelende in die Eingriffskuhle (7, 21) einformbar ist und eine stoffschlüssige Verbindung mittels Reibschweißen mit rotierendem Schweiß-Werkzeugelement oder mittels torsionalem Ultraschall-Schweißen hergestellt ist, wobei zumindest ein Teil der Schweißenergie über die Eingriffskuhle (7, 21) einspeisbar ist.

12. Konfiguriertes Kabel nach Anspruch 11, **dadurch gekennzeichnet, dass** die Aufnahmehülse (4, 16, 33) Teil eines Anschlusselements (11) zur elektrischen Kontaktierung ist.

13. Konfiguriertes Kabel nach Anspruch 11 oder 12, **dadurch gekennzeichnet, dass** das Endstück (5, 18) konusförmig aufgeweitet ist.

## Claims

1. Method for cohesive joining at an open bundle end of individual strands (2, 15) of at least one cable end (1), in which method a welding tool element (30, 37, 41, 43, 45, 48, 53) is mounted onto the open bundle end with a contact pressure acting in the longitudinal direction of the bundle end, and an engagement hollow (7, 21) is formed into the open bundle end and the engagement hollow (7, 21) is engaged into by an engagement pin (6, 20, 31, 38, 42, 44, 46, 49, 54) of the welding tool element (30, 37, 41, 43, 45, 48, 53), welding energy is introduced into the individual strands (2, 15) by friction welding with a rotating welding tool element or by torsional ultrasound welding, wherein at least some of the welding energy is introduced via the engagement hollow (7, 21), and the welding tool element (30, 37, 41, 43, 45, 48, 53) is removed from the bundle end.

2. Method according to Claim 1, **characterized in that** the engagement hollow (7, 21) is formed in by means of the engagement pin (6, 20, 31, 38, 42, 44, 46, 49, 54) of the welding tool element (30, 37, 41, 43, 45, 48, 53) .

3. Method according to Claim 1 or 2, **characterized in that** the engagement pin (6, 20, 31, 38, 42, 44, 46, 49, 54) is in one piece with the rest of the welding tool element (30, 37, 41, 43, 45, 48, 53) or is non-detachably fixed to the rest of the welding tool element (30, 37, 41, 43, 45, 48, 53).

4. Method according to one of Claims 1, 2 to 3, **characterized in that** the welding tool element (30, 37, 41, 43, 45, 48, 53) receives the bundle end, or at least a partial bundle thereof, in a ring-shaped receptacle (39, 55) which encircles the engagement pin (6, 20, 31, 38, 42, 44, 46, 49, 54) and which is formed by a depression.

5. Method according to one of the preceding claims, **characterized in that** the welding process is composed of at least two partial welding processes by different welding methods, wherein resistance welding is used as one of the partial welding processes, and the different welding methods are used in succession or simultaneously.

6. Method according to one of the preceding claims, **characterized in that** the open bundle end is inserted into a receiving sleeve (4, 16, 33) for the mounting of the welding tool element (30, 37, 41, 43, 45, 48, 53), wherein the engagement hollow (7, 21) of the bundle end is arranged in a flared end piece (5, 18) of the receiving sleeve (4, 16, 33).

7. Method according to Claim 6, **characterized in that**, during the welding process, at least a subset of ends, surrounding the engagement hollow (7, 21), of individual strands (2, 15) are pressed by means of the welding tool element (30, 37, 41, 43, 45, 48, 53) against the inner wall of the end piece (5, 18) of the receiving sleeve (4, 16, 33).

8. Method according to Claim 7, **characterized in that**, for the exertion of pressure on the individual strands (2, 15), the welding tool element (30, 37, 41, 43, 45, 48, 53) is guided in a pivoting and/or rotating movement in the engagement hollow (7, 21).

9. Method according to one of the preceding claims, **characterized in that**, in the open bundle end, individual strands (2, 15) of at least two cable ends (1) are combined, and a cable end node (14, 24, 32) is generated.

10. Method according to one of Claims 1 to 8, **characterized in that** the individual strands (2, 15) are joined to a terminal element (11) which is provided for electrical contacting.

11. Configured cable having at least one cable end (1) with an open end bundle end composed of individual strands (2, 15), **characterized in that** an engagement hollow (7, 21) can be formed into the open bundle end of the individual strands (2, 15) by an engagement pin (6, 20, 31, 38, 42, 44, 46, 49, 54) of a welding tool element (30, 37, 41, 43, 45, 48, 53) with a contact pressure acting in the longitudinal direction of the bundle end onto the open bundle end into the engagement hollow (7, 21) and a cohesive connection is produced by friction welding using a rotating welding tool element or by torsional ultrasound welding, wherein at least some of the welding energy can be introduced via the engagement hollow (7, 21).

12. Configured cable according to Claim 11, **characterized in that** the receiving sleeve (4, 16, 33) is part of a terminal element (11) for electrical contacting.

13. Configured cable according to Claim 11 or 12, **characterized in that** the end piece (5, 18) is flared in conical fashion.

## Revendications

1. Procédé d'assemblage par liaison de matière au niveau d'une extrémité de faisceau ouverte de brins individuels (2, 15) d'au moins une extrémité de câble (1), dans lequel un élément d'outil de soudage (30, 37, 41, 43, 45, 48, 53) est placé sur l'extrémité de faisceau ouverte avec une pression de pressage agissant dans la direction longitudinale de l'extrémité de faisceau, et un creux d'entrée en prise (7, 21) est formé dans l'extrémité de faisceau ouverte et une goupille d'entrée en prise (6, 20, 31, 38, 42, 44, 46, 49, 54) de l'élément d'outil de soudage (30, 37, 41, 43, 45, 48, 53) vient en prise dans le creux d'entrée en prise (7, 21), de l'énergie de soudage est injectée dans les brins individuels (2, 15) par soudage par friction à l'aide de l'élément d'outil de soudage rotatif ou par soudage par ultrasons en torsion, au moins une partie de l'énergie de soudage étant injectée par le biais du creux d'entrée en prise (7, 21), et l'élément d'outil de soudage (30, 37, 41, 43, 45, 48, 53) étant retiré de l'extrémité de faisceau.

2. Procédé selon la revendication 1, **caractérisé en ce que** le creux d'entrée en prise (7, 21) est formé au moyen de la goupille d'entrée en prise (6, 20, 31, 38, 42, 44, 46, 49, 54) de l'élément d'outil de soudage (30, 37, 41, 43, 45, 48, 53).

3. Procédé selon la revendication 1 ou 2, **caractérisé en ce que** la goupille d'entrée en prise (6, 20, 31, 38, 42, 44, 46, 49, 54) est réalisée d'un seul tenant avec le reste de l'élément d'outil de soudage (30, 37, 41, 43, 45, 48, 53) ou est fixée de manière non amovible au reste de l'élément d'outil de soudage (30, 37, 41, 43, 45, 48, 53) .

4. Procédé selon l'une des revendications 1, 2 et 3, **caractérisé en ce que** l'élément d'outil de soudage (30, 37, 41, 43, 45, 48, 53) reçoit l'extrémité de faisceau ou au moins un faisceau partiel de celle-ci dans un logement (39, 55) annulaire entourant la goupille d'entrée en prise (6, 20, 31, 38, 42, 44, 46, 49, 54) et formé par un évidement.

5. Procédé selon l'une des revendications précédentes, **caractérisé en ce que** le processus de soudage est constitué d'au moins deux processus de soudage partiels appartenant à des procédés de soudage différents, un soudage par résistance étant utilisé en tant que l'un des processus de soudage partiels et les procédés de soudage différents étant utilisés successivement ou simultanément.

6. Procédé selon l'une des revendications précédentes, **caractérisé en ce que** l'extrémité de faisceau ouverte est introduite dans une douille de logement (4, 16, 33) avant le placement de l'élément d'outil de soudage (30, 37, 41, 43, 45, 48, 53), le creux d'entrée en prise (7, 21) de l'extrémité de faisceau étant disposé dans un embout élargi (5, 18) de la douille de logement (4, 16, 33).

7. Procédé selon la revendication 6, **caractérisé en ce que** pendant le processus de soudage, au moins un nombre partiel d'extrémités de brins individuels (2, 15) entourant le creux d'entrée en prise (7, 21) sont pressées contre la paroi intérieure de l'embout (5, 18) de la douille de logement (4, 16, 33) au moyen de l'élément d'outil de soudage (30, 37, 41, 43, 45, 48, 53) .

8. Procédé selon la revendication 7, **caractérisé en ce que** pour le pressage des brins individuels (2, 15), l'élément d'outil de soudage (30, 37, 41, 43, 45, 48, 53) est guidé dans le creux d'entrée en prise (7, 21) suivant un mouvement de pivotement et/ou rotatif.

9. Procédé selon l'une des revendications précédentes, **caractérisé en ce que** dans l'extrémité de faisceau ouverte, des brins individuels (2, 15) d'au moins deux extrémités de câbles (1) sont réunis et un nœud d'extrémité de câble (14, 24, 32) est produit.

10. Procédé selon l'une des revendications 1 à 8, **caractérisé en ce que** les brins individuels (2, 15) sont joints à un élément de raccordement (11) prévu pour la mise en contact électrique.

11. Câble configuré comprenant au moins une extrémité de câble (1) dotée d'une extrémité de faisceau ouverte de brins individuels (2, 15), **caractérisé en ce qu'**un creux d'entrée en prise (7, 21) peut être formé dans l'extrémité de faisceau ouverte des brins individuels (2, 15) au moyen d'une goupille d'entrée en prise (6, 20, 31, 38, 42, 44, 46, 49, 54) d'un élément d'outil de soudage (30, 37, 41, 43, 45, 48, 53) avec une pression de pressage, agissant dans la direction longitudinale de l'extrémité de faisceau, sur l'extrémité de faisceau ouverte dans le creux d'entrée en prise (7, 21), et une liaison de matière est produite par soudage par friction à l'aide de l'élément d'outil de soudage rotatif ou par soudage par ultrasons en torsion, au moins une partie de l'énergie de soudage pouvant être injectée par le biais du creux d'entrée en prise (7, 21).

12. Câble configuré selon la revendication 11, **caractérisé en ce que** la douille de logement (4, 16, 33) fait partie d'un élément de raccordement (11) pour la mise en contact électrique.

13. Câble configuré selon la revendication 11 ou 12, **caractérisé en ce que** l'embout (5, 18) est élargi en forme de cône.
